# EUROPEAN PATENT SPECIFICATION

(11) **EP 0 970 651 B1**
(45) Date of publication and mention of the grant of the patent: **09.03.2005**
(21) Application number: 99305369.3
(22) Date of filing: 06.07.1999
(51) Int. Cl.: A47L 5/28, A47L 5/30, A47L 9/22

(54) **Vacuum cleaner**
Staubsauger
Aspirateur

(30) Priority: 06.07.1998 JP 19006298; 07.07.1998 JP 19119498; 07.07.1998 JP 19119598; 23.10.1998 JP 30246198; 23.10.1998 JP 30246298
(43) Date of publication of application: 12.01.2000
(60) Divisional application: 04028809.4
(73) Proprietor: MATSUSHITA ELECTRIC INDUSTRIAL CO., LTD., Kadoma-shi, Osaka 571-8501 (JP)
(72) Inventor: Kato, Tomonori, Yokaichi-shi, Shiga 527-0051 (JP); Nishikori, Tamaki, Kusatsu-shi, Shiga 525-0057 (JP); Hayakawa, Hiroshi, Gamo-gun, Shiga 520-2564 (JP); Ohara, Naoyuki, Yokaichi-shi, Shiga 527-0046 (JP); Ito, Koichi, Kanzaki-gun, Shiga 521-1224 (JP); Odachi, Toru, Yokaichi-shi, Shiga 527-0091 (JP); Hayashi, Seizo, Omihachiman-shi, Shiga 523-0892 (JP)
(74) Representative: Crawford, Andrew Birkby

(56) References cited:
- EP-A- 0 430 415
- DE-A- 4 135 406
- DE-U- 8 513 126
- GB-A- 2 292 882
- US-A- 4 393 536

## Description

### II. FIELD OF THE INVENTION

The present invention relates to a vacuum cleaner used in a general household.

### III. BACKGROUND OF THE INVENTION

A vacuum cleaner was hitherto constituted as shown in Fig. 54. The constitution is described below.

As shown in Fig. 54, a blower 501 is disposed inside a cleaner main body 502, and a dust collector 504 incorporating a dust bag 503 is provided above the cleaner main body 501, and the dust collector 504 and a suction unit 505 are connected through a hose 506. As indicated by arrow in Fig. 54, dust is sucked together with air from the buttom 507 of the suction unit 505 by means of the blower 501, and climbs up inside of the hose 506 by overcoming the gravity, and the dust is filtered by the dust bag 503 and captured inside the dust bag 503. The sucked air passes through the dust bag 503, runs through the inside of the blower 501, and is released outside from an exhaust port 508.

A vacuum cleaner incorporating a rechargeable secondary battery, and having a charging stand serving also as a putting stand is constituted as shown in Fig. 55. A cleaner main body 509 accommodates a secondary battery and a blower (neither shown), and a suction tool 510 is tiltably provided in the lower part of the cleaner main body 509. A charging stand 511 is to charge the secondary battery contained in the cleaner main body 509, and this charging stand 511 has a mounting portion 512 for mounting the suction tool 510, and a box portion 513 having a charging power transformer and a charging terminal (neither shown).

When the suction tool 510 is put on the mounting portion 512 of the charging stand 511, the terminal of the cleaner main body 509 and the terminal of the charging stand 511 are electrically connected, so that the secondary battery is charged.

Also as shown in Fig. 56, by setting a cleaner main body 514 incorporating a secondary battery in a charger 515, the circuit connected to a blower 516 in the cleaner main body 514 is cut off by force, thereby changing over to the charging circuit.

When the cleaner main body 514 is set in the charger 515, a charging terminal 517a contacts with a deforming terminal 518a, and is deformed at the same time, so that the deforming terminal 518a is separated from a fixed terminal 518c. By this action, the blower 516 is put in closed circuit whether a switch 519 is on or off, and a charging circuit is established. That is, if attempted to charge while the switch 519 is turned on, the power consumption in the blower 516 exceeds the charging capacity of the charger 515, and it is not charged substantially, and is discharged completely when trying to use next time, and this is to avoid such problem, and by changing over the circuits, it is intended to charge securely regardless of the state of the switch 519.

However, in the conventional vacuum cleaner as shown in Fig. 54, since the blower 501 and the dust collector 504 are disposed above the suction unit 505, when moving the dust on the floor into the dust bag 503 in the dust collector 504, it is necessary to lift upward by overcoming the gravity, and the moving distance is long and a large pressure loss occurs, and therefore the blower 501 is required to have a sufficient suction power. Accordingly, the blower 501 of large power consumption is required, and if the battery is used as the power source for the blower 501, sufficient suction power could not be assured in relation to the battery capacity and the size or other condition.

Therefore, using not only the suction power of the blower 501 but also the exhaust of the blower 501, a reflux type cleaner for enhancing the dust collecting performance must be designed in order to increase the dust collecting performance by a small power consumption. Many types of such reflux type cleaners have been proposed so far. Such proposals have many problems to be solved for practical use.

Besides, since the blower 501 is disposed in the cleaner main body 502, the weight and volume of the cleaner main body 502 are large, and the weight applied on the handle 118 during use is heavy, and the controllability is not favorable.

When turning the cleaner main body 502 backward by keeping the cleaner main body 502 nearly in vertical state to the floor, since there is no obstacle behind the cleaner main body 502, it is easy to turn, but when turning forward, the lower part of the cleaner main body 502 and the upper part of the suction unit 505 interfere with each other, and turning of the cleaner main body 502 is restricted. Accordingly, the reciprocating distance of the cleaner main body 502 by holding the handle 118 is limited, and the floor area for reciprocating the cleaner main body 502 is limited, and the number of times of reciprocating motions is increased, and it takes a longer time when cleaning the floor.

In the case of the vacuum cleaner using battery as the power source for the blower, in the constitution as shown in Fig. 55, the charging stand 511 for charging the secondary battery is often put at a corner of a room or corridor, and this is part of the cleaning area, and the large charging stand 511 was an obstacle when cleaning its vicinity.

Or, when charging the battery incorporated in the vacuum cleaner using the battery, in the constitution shown in Fig. 56, the structure is complicated around the terminal for changing over the charging circuit, and the number of terminals and wiring points is greater, and there was a high possibility of occurrence of defective charging and defective operation.

### IV. SUMMARY OF THE INVENTION

It is hence an object of the invention to blow an exhaust wind against the floor to lift the dust from the floor to enhance the dust collecting efficiency, and decrease the temperature rise of the motor for driving a dust scraper rotatably incorporated in a suction unit to enhance the durability.

In the invention, in order to achieve the above object, the present invention provides a vacuum cleaner comprising a blower for sucking dust from a suction unit, a dust scraper disposed in said suction unit, a motor for rotating and driving this dust scraper, and an exhaust passage for sending exhaust of said blower to said suction side, wherein the exhaust of said blower is blown to said motor; and wherein
the suction unit includes an intake unit on which the suction force of the blower acts, and an exhaust unit for passing the exhaust of said blower; and wherein the intake unit is provided at one end of the suction unit, and the exhaust unit is provided at the opposite end of the suction unit such that in use
the air stream circulating from the exhaust unit to the intake unit is formed almost parallel to the floor in the longitudinal direction of the suction unit.

### V. BRIEF DESCRIPTION OF THE DRAWINGS

Fig. 1 is a side view of a vacuum cleaner in a first embodiment of the invention;
Fig. 2 is a front view of the vacuum cleaner;
Fig. 3 is a sectional view along line a-a in Fig. 1;
Fig. 4 is a sectional view along line b-b in Fig. 3;
Fig. 5 is a sectional view along line c-c in Fig. 3;
Fig. 6 is a sectional view along line d-d in Fig. 3;
Fig. 7 is an electric circuit diagram of the vacuum cleaner;
Fig. 8 is a front view of a vacuum cleaner in a second embodiment of the invention;
Fig. 9 is a diagram showing flow of exhaust wind, suction wind and dust of the vacuum cleaner;
Fig. 10 is a sectional view along line e-e in Fig. 8;
Fig. 11 is a block diagram around suction unit of the vacuum cleaner;
Fig. 12 is a sectional view along line f-f in Fig. 11;
Fig. 13 is a block diagram around suction unit of a vacuum cleaner in a third embodiment of the invention;
Fig. 14 is a diagram showing a throttled state of an air flow adjusting valve of the vacuum cleaner;
Fig. 15 is a block diagram around suction unit of a vacuum cleaner in a fourth embodiment of the invention;
Fig. 22 is a block diagram around suction unit of a vacuum cleaner in a sixth embodiment of the invention;
Fig. 23 is a lock diagram around suction unit in other example of the vacuum cleaner;
Fig. 24 is a block diagram around suction unit in a different example of the vacuum cleaner;
Fig. 25 is a block diagram around suction unit in other different example of the vacuum cleaner;
Fig. 26 is a block diagram around suction unit of a vacuum cleaner in a seventh embodiment of the invention;
Fig. 54 is a partially cut-away side view of a conventional vacuum cleaner;
Fig. 55 is a perspective view of other example of the conventional vacuum cleaner; and
Fig. 56 is a circuit diagram of other example of the conventional vacuum cleaner.

### VI. DESCRIPTION OF THE PREFERRED EMBODIMENTS

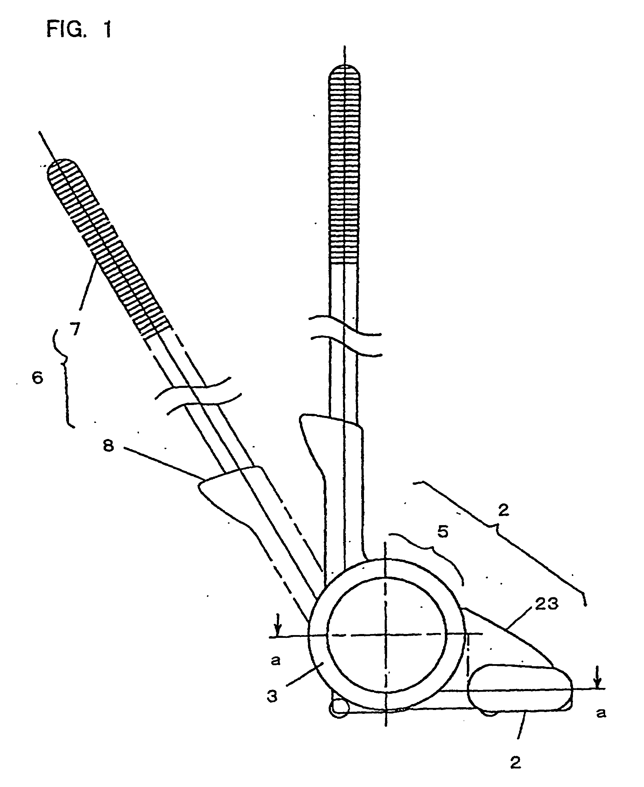

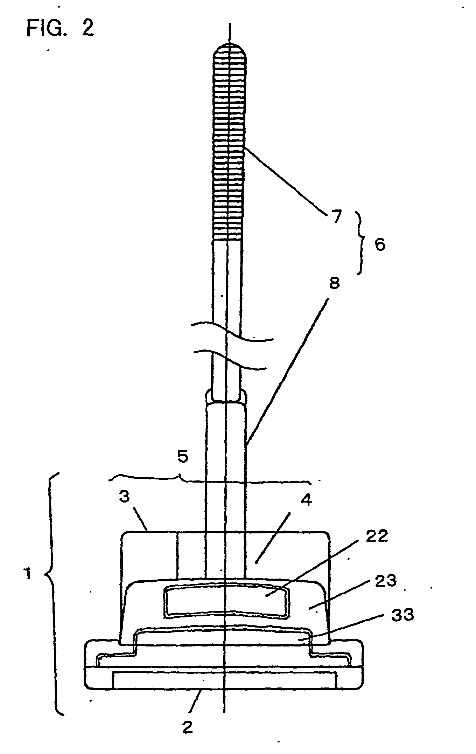

A first embodiment of the invention is described below while referring to Fig. 1 to Fig. 7.

As shown in Fig. 1 to Fig. 3, a cleaner main body 1 has a suction unit .2 at the front side, and a main body unit 5 comprising a dust collector 3 and a blower 4 is provided at the rear side. A handle unit 6 includes a handle 7, and is attached to a pivot 8 rotatably provided in the main body unit 5. A battery 10 is a primary battery or secondary battery for power source, and is disposed between the main body unit 5 and suction unit 2, and is disposed integrally by means of a heat-shrink film.

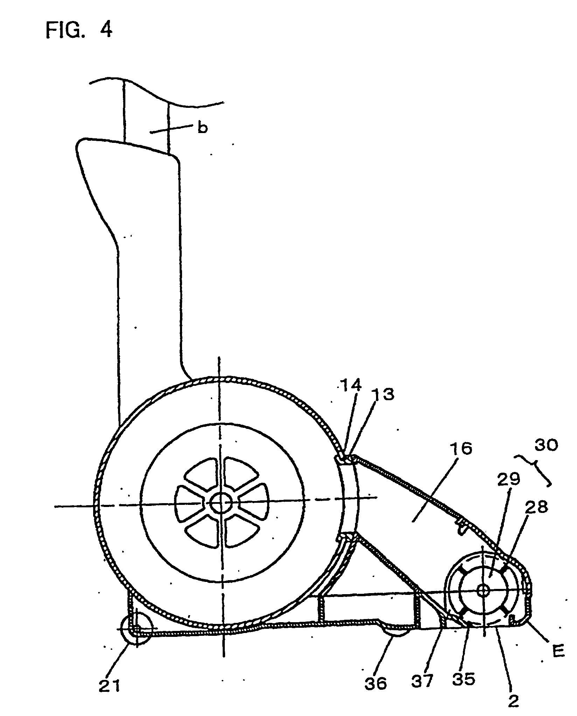

The dust collector 3 incorporates a filter 11, and is fitted to a mounting unit 12 of the main body unit 5, and is detachably mounted through a lock not shown in the drawing, and formed in a nearly cylindrical form. In the dust collector 3, as shown in Fig. 4, an intake port 14 mounting an intake packing 13 on the outer circumference is formed, and is pressed to the end face of an intake passage 16 communicating with an intake unit 15 provided in the suction unit 2.

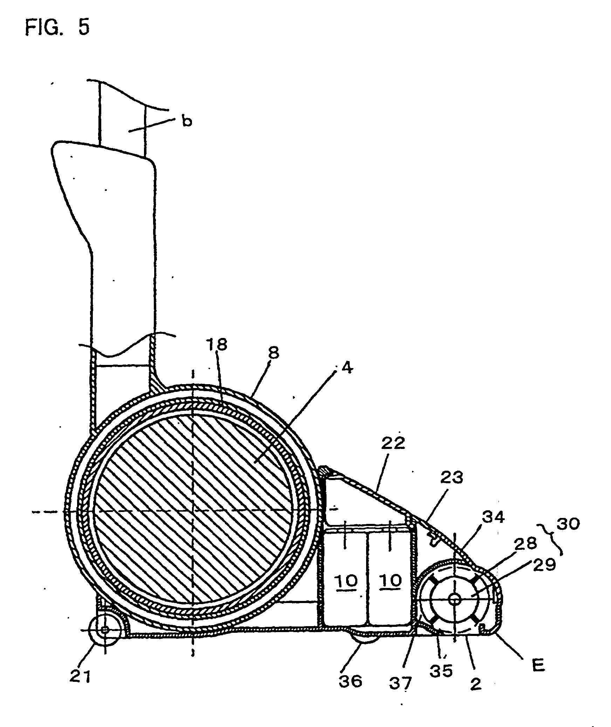

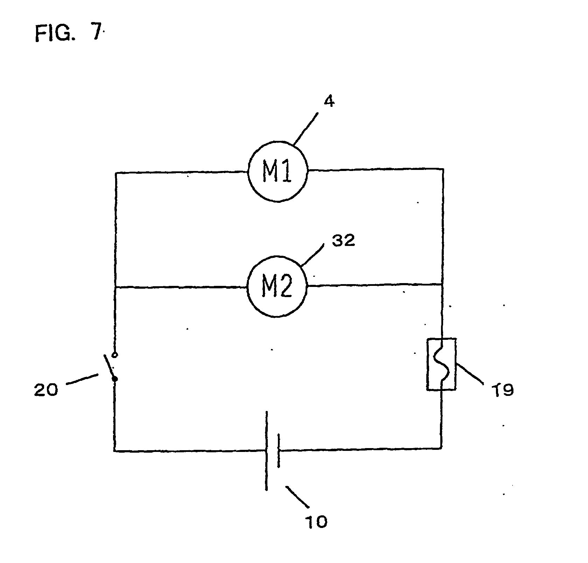

The blower 4 is held by an elastic support 17, and is fixed to the main body unit 5, by screws not shown in the drawing, together with a motor case 18 as shown in Fig. 5. The pivot 8 of the handle unit 6 is rotatably mounted about the outer circumference of the motor case 18. The blower 4 is connected parallel to the battery 10 for power source through a current fuse 19 and power switch 20 as shown in Fig. 7. The suction unit 2, dust collector 3, blower 4, intake passage 16, and battery 10 are disposed on a nearly flat plane mutually within the cleaner main body 1.

In this constitution, the dust sucked in from the suction port 2 together with the suction air of the blower 4 is carried into the dust collector 3 through the intake passage 16, and is captured in the filter 11. At this time, since the dust collector 3 and the blower 4 are disposed nearly on a same level as the suction unit 2, dust moves only on the horizontal plane near the floor, and it is not necessary to lift upward, and therefore a relatively large mass of dust can be captured by a small energy, so that the battery 10 and blower 4 may be reduced in size and weight. Moreover, since all constituent parts are accommodated in the cleaner main body 1, and the handle unit 6 is designed to be rotatable with the cleaner main body 1 independently, the weight of the cleaner main body 1 does not act on the handle 7 during use, so that the load in cleaning operation may be lessened.

Consequently, as shown in Fig. 1 to Fig. 3, the dust collector 3 and blower 4 composed in the main body unit 5 provided behind the suction unit 2 are disposed parallel to the longitudinal direction of the suction unit 2 along the axial line H-H, and the width L of the main body unit 5 is set smaller than the width W of the suction unit 2.

In this constitution, since the axial line of the dust collector 3 and blower 4 of the main body unit 5 is disposed parallel to the longitudinal direction of the suction unit 2, the dimension in the longitudinal direction is set small and compact. When storing the stand, the projection from the wall is small, and neat storing is realized. Moreover, since the width L of the main body unit 5 is set smaller than the width W of the suction unit 2, the side of the main body unit 5 does not hit against the furniture or the like ahead of the suction unit 2 when cleaning, and the overall width of the suction unit 2 is effectively utilized to capture dust, so that the cleaning efficiency may be enhanced.

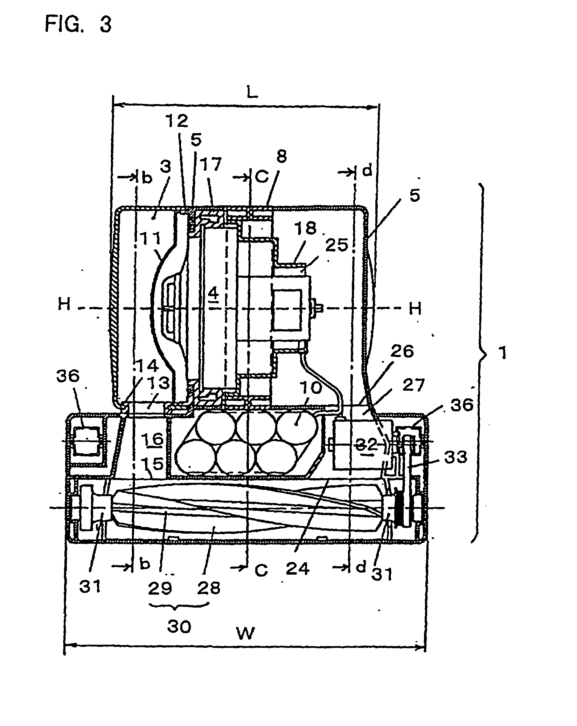

Next, as shown in Fig. 3 and Fig. 5, a first running roller 21 is provided at the lower side of the main body unit 5, and the battery 10 is disposed between the first running roller 21 and the suction unit 2, and a lid 22 is detachably provided. In Fig. 5, moreover, the suction unit 2 and the main body unit 5 are composed of inclined planes 23 nearly contacting with each other at the upper side.

In this constitution, the weight of the battery 10 acts in the direction of pressing the suction unit 2 onto the floor in the center of the running roller 21, and the clearance between the suction unit 2 and the floor may be stably assured, and the dust collecting efficiency may be enhanced. Moreover, by the inclined plane 23, it can be smoothly inserted beneath the furniture during cleaning, and interference is decreased and the ease of handling may be enhanced.

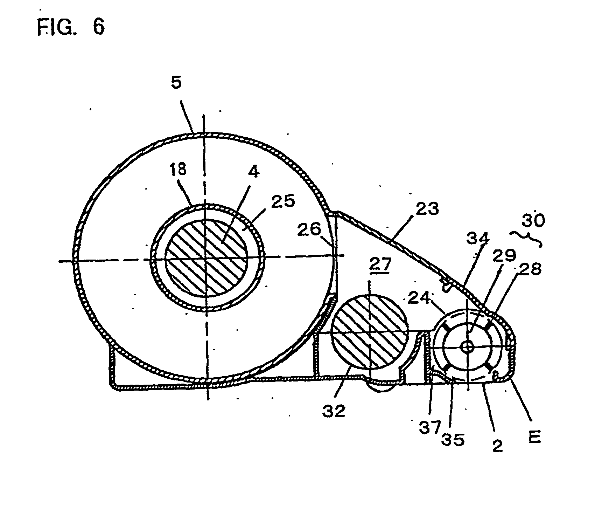

Also as shown in Fig. 3 and Fig. 6, at the suction unit 2, an exhaust unit 24 is provided at the opposite side end of the intake unit 15 provided at one end, and an exhaust passage 27 is formed to communicate from an exhaust port 25 of the motor case 18 to the exhaust unit 24 through the discharge portion 26 of the main body unit 5. In the suction unit 2, a brush body 30 mounting a lip body 28 made of bristle brush or rubber blade on a shaft body 29 is rotatably provided through a bearing 31, and it is designed to rotate and drive through a belt body 33 by a motor 32. The brush body 30 composes a dust scraper. The lip body 28 is made of a bristle or rubber material that can be washed in water, and the shaft body 29 is similarly made of synthetic resin material that can be washed in water, and by detaching an upper cover 34 from the cleaner main body 1, it can be detached together with the bearing 31. Part of the outer circumference of the motor 32 is formed oppositely to the exhaust passage 27. As shown in Fig. 7, the motor 32 is electrically connected parallel to the battery 10.

In this constitution, the exhaust from the blower 4 is released to the floor from the exhaust unit 24 by way of the exhaust port 25, discharge unit 26 and exhaust passage 27, and lifts the dust on the floor upward, and forms a circulating flow of running into the intake unit 15 from the exhaust unit 24 through the suction unit 2 to facilitate the move of the dust into the dust collector 3, so that the dust collecting efficiency may be enhanced. Moreover, by the synergistic action of scraping by rotation of the brush body 30 and the circulating flow, the dust efficiency is further enhanced as compared with the case of scraping by the rotation of the brush body 30 only or circulating flow only without brush body 30. Still more, since the brush body 30 is washable in water, it can be always kept clean, and the brush body 30 can be quickly and completely dried by the exhaust circulating flow, and a sanitary constitution is realized. In addition, by blowing the exhaust to the motor 32, if the output of the motor 32 is increased, temperature rise of the winding and sliding brush can be suppressed, and the durability may be improved.

As shown in Fig. 4, in the rear lower side of the suction unit 2, a scraper 35 projecting from the rear end to the front side of the outer circumference of the brush body 30 is provided in almost entire width region of the suction unit 2, and this scraper 35 has a plane portion behind, and is provided with a holder 37 for holding the dust temporarily. Also, as shown in Fig. 3 and Fig. 5, at the lower side of the main body unit 5, the first running roller 21 is provided, and a second running roller 36 is provided at both sides behind the suction unit 2.

In this constitution, by installing the scraper 35, the dust scraped up by the rotation of the brush body 30 is captured by the holder 37, and the dust is easily transferred to the dust collector 3, and the dust collection efficiency is enhanced. By the second running roller 36, the front end of the suction unit 2 can be lifted from the floor, and the front lower end E of the suction unit 2 is cleared from the floor in the entire region, so that the dust from the entire region of the suction unit 2 can be easily sucked, and moreover the resistance in manipulation such as sticking on the carpet can be lessened, and the dust collection efficiency is high and the ease of handling is improved.

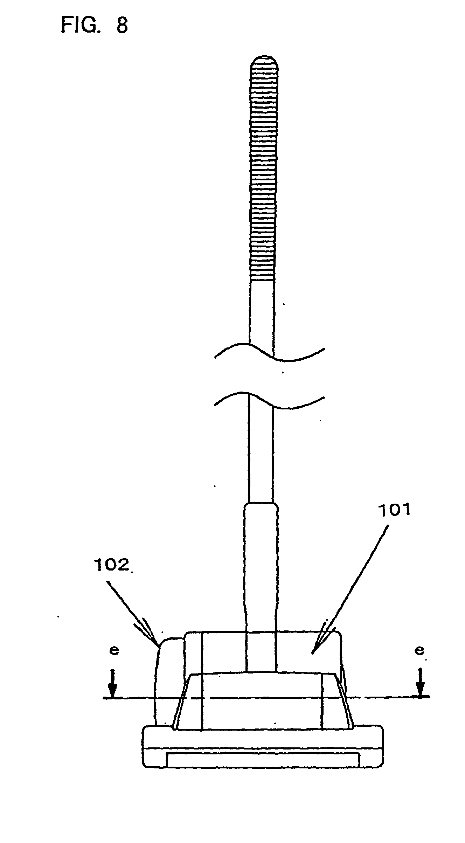

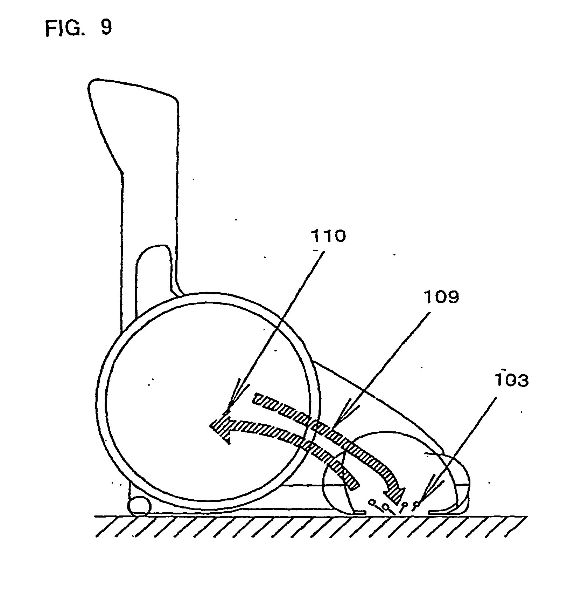

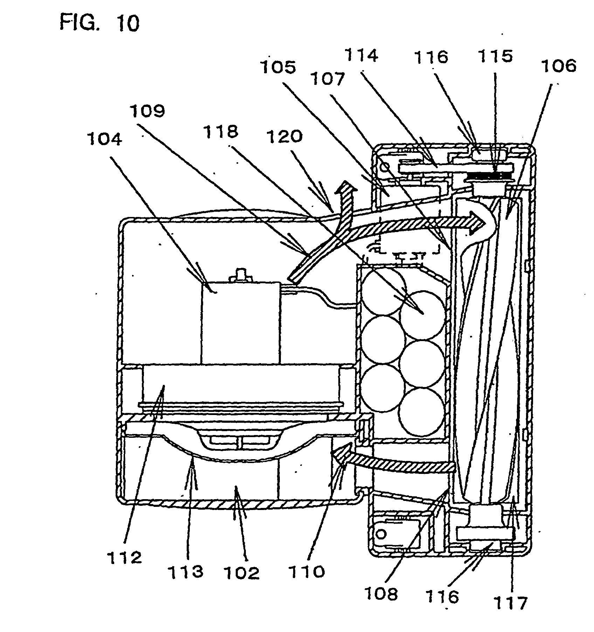

A second embodiment of the invention is described while referring to Fig. 8 through Fig. 12.

As shown in Fig. 8 to Fig. 10, a cleaner main body 101 has a dust collection chamber 102 for accumulating dust inside, and this dust collection chamber 102 has a blower 104 comprising a dust filter 113 and a suction fan 112. A brush body 106 is for scraping up dust from the floor, and it is supported on a bearing 116, and is driven by a motor 105 through a belt 114 and a pulley 115. A battery 118 is for driving the blower 104 and motor 105.

An intake unit 108 communicating from the suction unit 117 to the dust collection chamber 102, and an exhaust unit 107 for releasing the exhaust from the blower 104 into the suction unit 117 are provided, and a circulating air stream from the exhaust unit 107 to the intake unit 108 is formed, in which part of exhaust wind 109 released from the blower 104 is circulating into the exhaust unit 107 of the suction unit 117, and part of exhaust wind is released to other parts than the suction port 117, and the air flow rate of the intake wind 110 circulating from the exhaust unit 107 to the intake unit 108 is adjusted to 50 to 95% of the total exhaust from the blower 104.

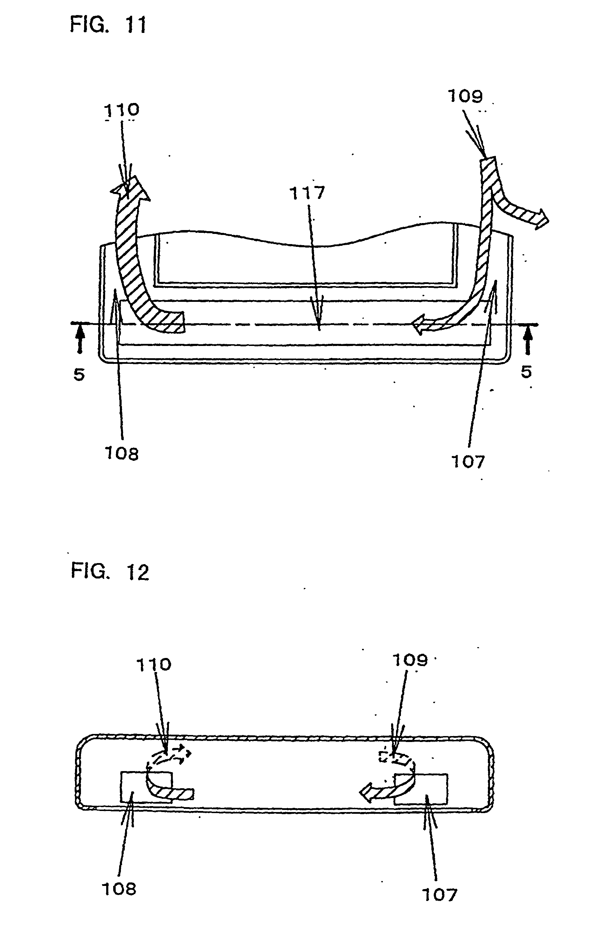

In this constitution, when the blower 104 is driven, the inside of the dust collection chamber 102 is set in negative pressure state. The exhaust wind 109 released from the blower 104 is partly blown from behind the blower 104 onto the floor from the exhaust unit 107 communicating with the suction unit 117 as shown in Fig. 11 and Fig. 12, and the rest is released to outside from the exhaust port 120 communicating the suction unit 117 with the outside. As a result, dust 103 on the floor is blow by the suction unit 117 and is lifted from the floor. The suction unit 117 has a brush body 106 having its both ends rotatably held together with the cleaner main body 101 by means of bearing 116, and this brush body 106 is rotated by the power transmitted from the motor 105 through pulley 15 and belt 114. As the brush body 106 rotates, dust particles caught in the depth of piles of carpet or floor are scraped away. The dust 103 lifted from the floor by the brush body 106 and exhaust wind 109 is borne on the air stream circulating from the exhaust unit 107 to the intake unit 108, and carried into the dust collection chamber 102 from the intake unit 108, and is accumulated in the dust collection chamber 102 through the dust filter 113. Therefore, if the suction power of the blower 104 is weak, by blowing the exhaust wind 109 onto the floor, the dust 103 is lifted from the floor, and the dust collection efficiency can be enhanced. It is also possible to prevent scatter of dust 103 into the suction unit 117 due to excessive air flow rate or wind velocity of the exhausts wind 109 blown onto the floor. Moreover, since the heat generated from the blower 104 can be released outside together with the exhaust released outside of the suction unit 117, temperature rise in the vacuum cleaner can be suppressed. Part of the exhaust is released outside, and all is not circulating into the intake unit 108, the temperature rise of the blower 104 and others can be also suppressed, and the durability may be enhanced. In addition, on the floor of a carpet with long piles, by scraping the floor by the brush body 106, the exhaust wind 109 reaches to the inner depth of piles, and the dust particles caught in the deeper area of the floor can be blown up.

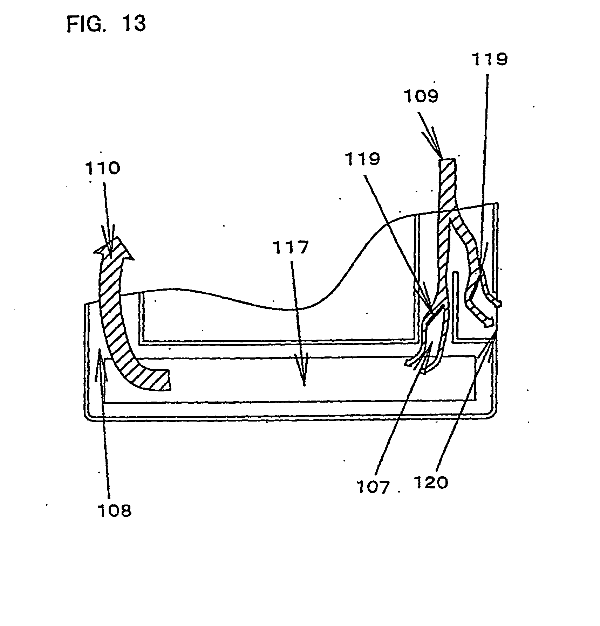

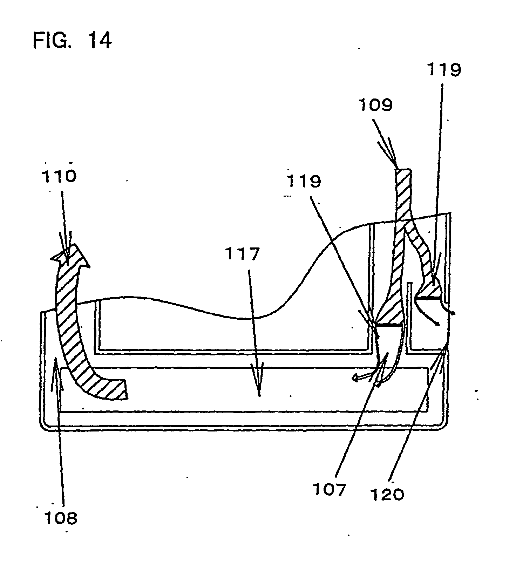

A third embodiment of the invention is described while referring to Fig. 13 and Fig. 14.

As shown in the drawings, an air flow rate adjusting valve 119 adjusts the air flow rate circulating from the exhaust unit 107 into the suction unit 117, or the air flow rate released into the exhaust port 120, or both of them. The other constitution is same as in the second embodiment.

In this constitution, the air flow rate adjusting valve 119 is rotatable, and it adjusts the flow rate of the exhaust wind 109 blown onto the floor from the exhaust unit 107, or the flow rate released to the exhaust port 120, or both of them, appropriately depending on the type of floor or dust level in the dust chamber. Accordingly, while suppressing scatter of dust outside of the suction port 117 due to excessive air flow rate or wind velocity of the exhaust wind 109 blown onto the floor, the floor dust can be collected efficiently depending on the type of the floor and the dust level in the dust collection chamber.

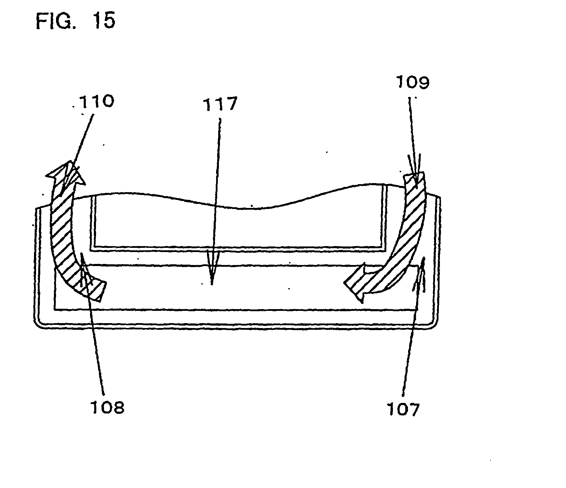

A fourth embodiment of the invention is described while referring to Fig. 15.

As shown in Fig. 15, an intake unit 108 is provided at one end of the suction unit 117, and an exhaust unit 107 is provided at the opposite end, and the exhaust wind 109 released from the exhaust unit 107 passes almost parallel to the floor in the longitudinal direction of the suction unit 117, and a circulating air stream into the intake unit 108 is formed. The other constitution is same as in the second embodiment.

In this constitution, the air stream circulating from the exhaust unit 107 into the intake unit 108 is formed nearly parallel to the floor in the longitudinal direction of the suction unit 117, and therefore the dust and air move nearly on the horizontal plane near the floor, and impedance by gravity is less. Moreover, by blowing the exhaust wind 109 onto the floor, dust is lifted from the floor, and the dust collection efficiency can be enhanced. Still more, the air stream circulating from the exhaust unit 107 to the intake unit 108 passes the entire floor beneath the opening of the suction unit 117 thoroughly, and the exhaust wind 109 flows smoothly the longest distance to the intake unit 108, so that the dust collection efficiency may be enhanced in a wide range of the floor. The exhaust wind 109 circulates into the intake unit 108, and leak of exhaust to outside of the suction unit 117 is prevented, and the dust beneath the suction unit 117 does not scatter outside of the suction unit 117, and the ease of handling is improved at the same time.

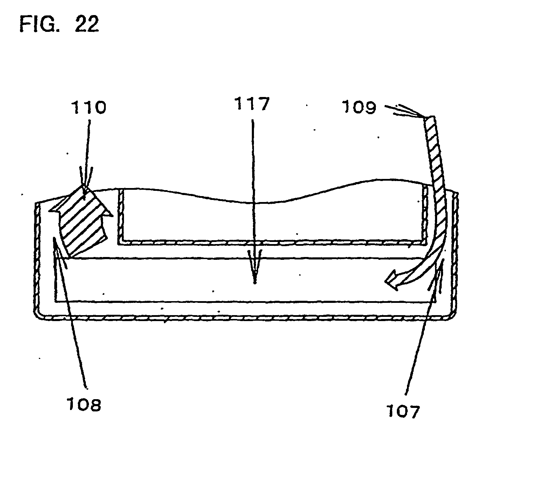

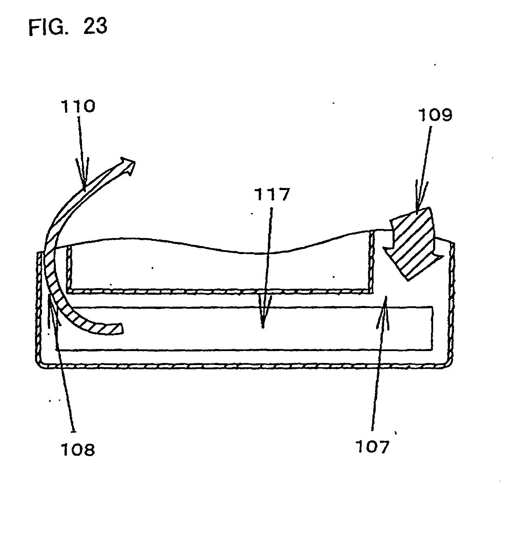

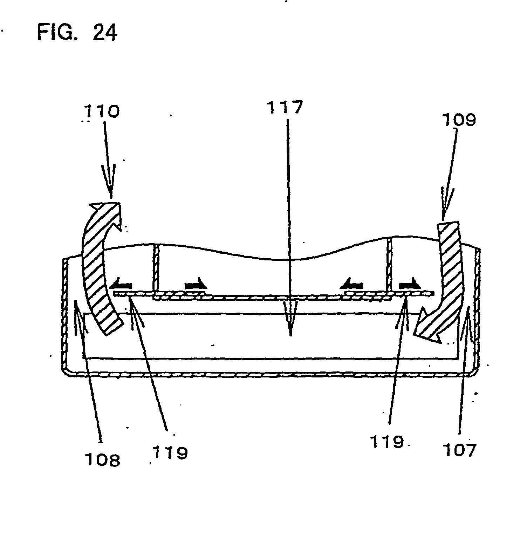

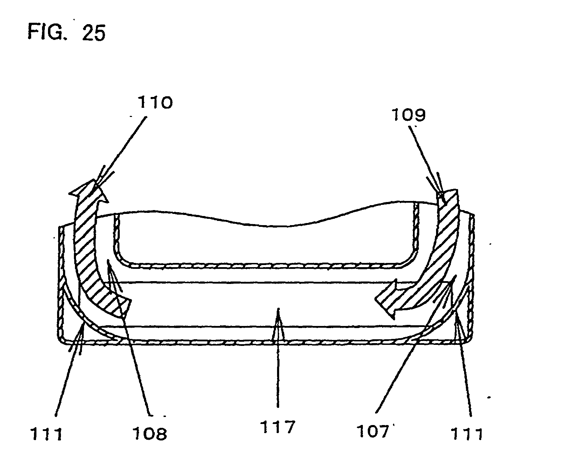

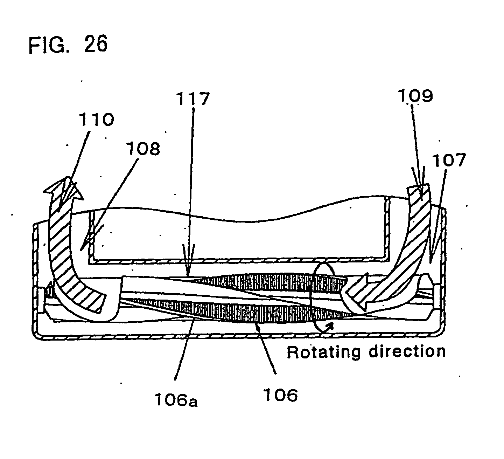

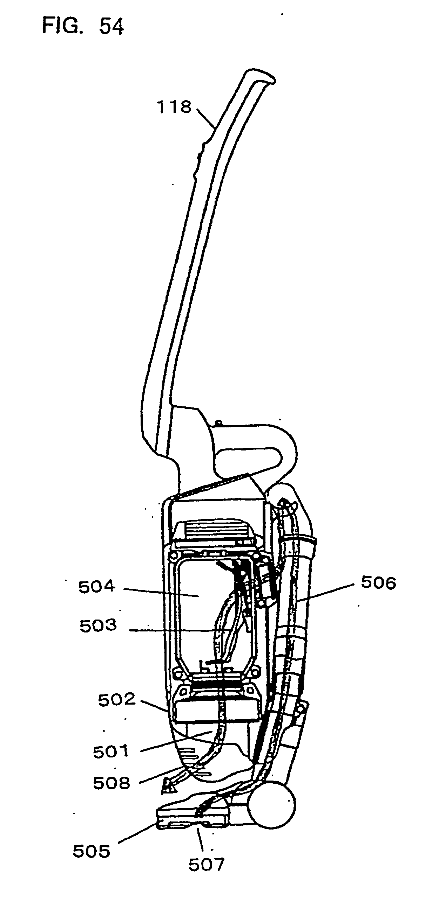

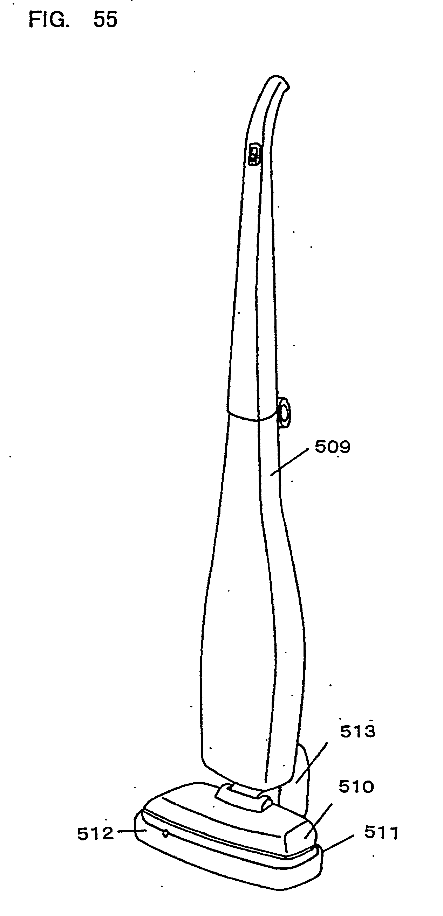

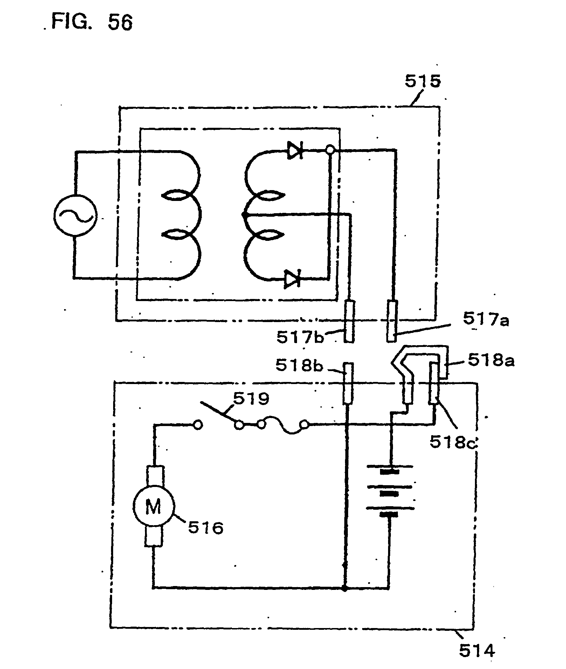

A sixth embodiment of the invention is described below while referring to Fig. 22.

As shown in Fig. 22, the exhaust unit 107 has its opening area set narrower than the opening area of the intake unit 108, and the wind velocity of the exhaust wind 109 released from the exhaust unit 107 is set faster than the wind velocity of the intake wind 110 sucked into the intake unit 108. The other constitution is same as in the second embodiment.

In this constitution, by narrowing the opening area of the exhaust unit 107, the wind velocity of the exhaust wind 109 is increased, and by blowing onto the floor, the exhaust wind 109 can be blown onto the floor powerfully, and dust particles hidden in deepest parts of the floor in long piles of carpet can be lifted from the floor, so that the dust collection efficiency may be enhanced.

Or, as shown in Fig. 23, by setting the opening area of the exhaust unit 107 wider than the opening area of the intake unit 108, and setting the wind velocity of the exhaust wind 109 released from the exhaust unit 107 slower than the wind velocity of the intake wind 110 sucked into the intake unit 108, it is possible to prevent scatter of dust to outside of the suction unit 117 due to excessive wind velocity of the exhaust wind 109 blown onto the floor.

By setting the wind velocity of the exhaust wind 109 released from the exhaust unit 107 nearly same as the wind velocity of the intake wind 110 sucked into the intake unit 108, the exhaust wind 109 is blown to the floor to lift the dust from the floor, and the dust collection efficiency is enhanced, while the wind velocity of the air stream formed from the exhaust unit 107 to the intake unit 108 is stabilized, so that the dust lifted from the floor can be smoothly collected by the intake unit 108.

Further, as shown in Fig. 24, air flow rate adjusting valves 119 are provided near the exhaust unit 107 and intake unit 108 slidably in the lateral direction, and the opening area of the exhaust unit 107 and intake unit 108 is freely adjusted, and by adjusting the wind velocity of the exhaust wind 109 released from the exhaust unit 107, or the wind velocity of the intake wind 110 sucked into the intake unit 108, or both of them, for example, on the carpet floor, the air flow rate adjusting valve 119 at the exhaust unit 107 side is throttled and the air flow rate adjusting valve 119 at the intake unit 108 side is opened to increase the wind velocity of the exhaust wind 109, and dust caught in long piles is lifted and the dust collection performance is enhanced. On a wooden floor, to the contrary, by opening the air flow rate adjusting valve 119 at the exhaust unit 107 side and throttling the air flow rate adjusting valve 119 at the intake unit 108 side, scattering of the dust on the floor to the surroundings is suppressed.

Moreover, as shown in Fig. 25, by installing guide walls 111 for smoothly guiding the exhaust wind 109 and intake wind 110 near the exhaust unit 107 and intake unit 108, the exhaust wind 109 is guided in the direction toward the intake unit 108 by the guide wall 111 provided near the exhaust unit 107, and the intake wind 110 is guided in the direction toward the intake unit 108 by the guide wall 111 provided near the intake unit 108, and therefore the exhaust wind 109 smoothly flows into the intake unit 108, and the air stream in the suction unit 117 is stabilized, and the dust lifted from the floor by the exhaust wind 109 can be smoothly collected by the intake unit 108.

A seventh embodiment of the invention is described below while referring to Fig. 26.

As shown in Fig. 26, a brush body 106 is rotatably or oscillatably provided, and a dust scraper 106a in a band form is spirally wound around this brush body 106, and the air stream along the twist of the dust scraper 106a in a band form generated by rotation of the brush body 106, and the air stream flowing from the exhaust unit 107 to the intake unit 108 are matched in direction. The other constitution is same as in the second embodiment.

In this constitution, the floor dust lifted by the exhaust wind 109 from the exhaust unit 107 advances into the intake unit 108 along the running direction of the air stream conforming to the twist of the dust scraper 106a in a band form generated by rotation of the brush body 106, and as the dust collides against the dust scraper 106a in a band form, flow of dust is not blocked but is carried into the intake unit 108. As a result, the air stream and dust flow in the suction unit 117 are smooth, and the dust collection performance is enhanced.

## Claims

1. A vacuum cleaner comprising a blower (4,104) for sucking dust from a suction unit (2,117), a dust scraper (30,106) disposed in said suction unit, a motor (32,105) for rotating and driving this dust scraper, and an exhaust passage (27) for sending exhaust (109) of said blower to said suction side, wherein the exhaust of said blower is blown to said motor; and wherein
the suction unit includes an intake unit (15,108) on which the suction force of the blower acts, and an exhaust unit (24,107) for passing the exhaust of said blower; **characterized in that**
the intake unit is provided at one end of the suction unit, and the exhaust unit is provided at the opposite end of the suction unit such that in use the air stream circulating from the exhaust unit (24,107) to the intake unit (15,108) is formed almost parallel to the floor in the longitudinal direction of the suction unit.

2. A vacuum cleaner of claim 1, wherein part of exhaust wind from the blower is circulating into the exhaust unit of the suction unit, part of the exhaust wind is released outside of the suction unit, and the air flow rate circulating from the exhaust unit to the intake unit is adjusted to 50 to 95% of the total exhaust from the blower.

3. A vacuum cleaner of claim 2, wherein the air flow rate released outside of the suction unit, or the air flow rate circulating into the suction unit, or both of them are adjustable.

4. A vacuum cleaner of claim 1 or 2, wherein the wind velocity of the exhaust wind released from the exhaust unit is faster than the wind velocity of the intake wind sucked into the intake unit.

5. A vacuum cleaner of claim 1 or 2, wherein the wind velocity of the exhaust wind released from the exhaust unit is slower than the wind velocity of the intake wind sucked into the intake unit.

6. A vacuum cleaner of claim 1 or 2, wherein the wind velocity of the exhaust wind released from the exhaust unit and the wind velocity of the intake wind sucked into the intake unit are nearly the same.

7. A vacuum cleaner of claim 1 or 2, wherein the wind velocity of the exhaust wind released from the exhaust unit, or the wind velocity of the intake wind sucked into the intake unit, or both of them are adjustable.

8. A vacuum cleaner of claim 1 or 2, wherein the dust scraper is disposed rotatably or oscillatably.

9. A vacuum cleaner of claim 1 or 2, wherein a dust scraping element in a band form is spirally wound around the dust scraper, and the air stream along the twist of the dust scraping element of a band form generated by rotation of the dust scraper, and the air stream flowing from the exhaust unit to the intake unit are matched in direction.

10. A vacuum cleaner of claim 1 or 2, wherein a mechanism for guiding the exhaust wind from the exhaust unit smoothly in the intake unit direction is provided near the exhaust unit of the suction unit.

## Patentansprüche

1. Staubsauger, der ein Gebläse (4, 104) zum Saugen von Staub über eine Ansaugeinheit (2, 117), einen Staubabstreifer (30, 106), der in der Ansaugeinheit angeordnet ist, einen Motor (32, 105), der diesen Staubabstreifer dreht und antreibt, sowie einen Abluftkanal (27) zum Leiten von Abluft (109) des Gebläses zu der Ansaugseite umfasst, wobei die Abluft des Gebläses zu dem Motor geblasen wird, und wobei:
die Ansaugeinheit eine Einlasseinheit (15, 108), auf die die Saugkraft des Gebläses wirkt, sowie eine Ablufteinheit (24, 107) enthält, die die Abluft des Gebläses leitet, **dadurch gekennzeichnet, dass**:
die Einlasseinheit an einem Ende der Ansaugeinheit vorhanden ist und die Ablufteinheit am gegenüberliegenden Ende der Ansaugeinheit vorhanden ist, so dass in Funktion der Luftstrom, der von der Ablufteinheit (24, 107) zu der Einlasseinheit (15, 108) zirkuliert, nahezu parallel zum Boden in der Längsrichtung der Ansaugeinheit erzeugt wird.

2. Staubsauger nach Anspruch 1, wobei ein Teil der Abluft von dem Gebläse in die Ablufteinheit der Ansaugeinheit zirkuliert, ein Teil der Abluft aus der Ansaugeinheit abgegeben wird und die Luftströmungsmenge, die von der Ablufteinheit zu der Einlasseinheit zirkuliert, auf 50 bis 95% der Gesamt-Abluft von dem Gebläse reguliert wird.

3. Staubsauger nach Anspruch 2, wobei die Luftströmungsmenge, die aus der Ansaugeinheit abgelassen wird, oder die Luftströmungsmenge, die in der Ansaugeinheit zirkuliert, oder beide reguliert werden können.

4. Staubsauger nach Anspruch 1 oder 2, wobei die Luftstromgeschwindigkeit des Abluftstroms, der aus der Ablufteinheit abgelassen wird, höher ist als die Luftstromgeschwindigkeit des Einlassluftstroms, der in die Einlasseinheit eingesaugt wird.

5. Staubsauger nach Anspruch 1 oder 2, wobei die Luftstromgeschwindigkeit des Abluftstroms, der aus der Ablufteinheit abgelassen wird, niedriger ist als die Luftstromgeschwindigkeit des Einlassluftstroms, der in die Einlasseinheit eingesaugt wird.

6. Staubsauger nach Anspruch 1 oder 2, wobei die Luftstromgeschwindigkeit des Abluftstroms, der aus der Ablufteinheit abgelassen wird, und die Luftstromgeschwindigkeit des Einlassluftstroms, der in die Einlasseinheit eingesaugt wird, nahezu gleich sind.

7. Staubsauger nach Anspruch 1 oder 2, wobei die Luftstromgeschwindigkeit des Abluftstroms, der aus der Ablufteinheit abgelassen wird, oder die Luftstromgeschwindigkeit des Einlassluftstroms, der in die Einlasseinheit eingesaugt wird, oder beide reguliert werden können.

8. Staubsauger nach Anspruch 1 oder 2, wobei der Staubabstreifer drehend oder schwingend angeordnet ist.

9. Staubsauger nach Anspruch 1 oder 2, wobei ein Staubabstreifelement in Bandform spiralförmig um den Staubabstreifer herumgewickelt ist und die Luftströmung entlang der Verdrehung des Staubabstreifelementes in Bandform, die durch Drehung des Staubabstreifers erzeugt wird, und die Luftströmung, die von der Ablufteinheit zu der Einlasseinheit strömt, bezüglich der Richtung aufeinander abgestimmt sind.

10. Staubsauger nach Anspruch 1 oder 2, wobei ein Mechanismus, der den Abluftstrom von der Ablufteinheit kontinuierlich in Richtung der Einlasseinheit leitet, in der Nähe der Ablufteinheit der Ansaugeinheit vorhanden ist.

## Revendications

1. Aspirateur comportant un ventilateur (4, 104) destiné à aspirer de la poussière depuis une unité d'aspiration (2, 117), une brosse à poussière (30, 106) disposée dans ladite unité d'aspiration, un moteur (32, 105) destiné à entraîner et faire tourner cette brosse à poussière, et un passage d'échappement (27) destiné à envoyer l'échappement (109) dudit ventilateur vers ledit côté d'aspiration, l'échappement dudit ventilateur étant soufflé vers ledit moteur; et dans lequel
l'unité d'aspiration comprend une unité d'admission (15, 108) sur laquelle la force d'aspiration du ventilateur agit, et une unité d'échappement (24, 107) pour le passage de l'échappement dudit ventilateur; **caractérisé en ce que**
l'unité d'admission est pourvue à une extrémité de l'unité d'aspiration, et l'unité d'échappement est prévue à l'extrémité opposée de l'unité d'aspiration de telle sorte que, lors de l'utilisation, le courant d'air qui circule depuis l'unité d'échappement (24, 107) jusqu'à l'unité d'échappement (15, 108) est formé pratiquement parallèlement au sol dans la direction longitudinale de l'unité d'aspiration.

2. Aspirateur selon la revendication 1, dans lequel une partie du souffle d'échappement du ventilateur circule dans l'unité d'échappement de l'unité d'aspiration, une partie du souffle d'échappement est libérée à l'extérieur de l'unité d'aspiration, et le débit d'air circulant de l'unité d'échappement vers l'unité d'admission est ajusté à 50 à 95% de l'échappement total du ventilateur.

3. Aspirateur selon la revendication 2, dans lequel le débit d'air libéré à l'extérieur de l'unité d'aspiration, ou le débit d'air circulant dans l'unité d'aspiration, ou les deux sont réglables.

4. Aspirateur selon la revendication 1 ou 2, dans lequel la vitesse de souffle du souffle d'échappement libéré de l'unité d'échappement est plus grande que la vitesse de souffle du souffle d'admission aspiré dans l'unité d'admission.

5. Aspirateur selon la revendication 1 ou 2, dans lequel la vitesse de souffle du souffle d'échappement libéré de l'unité d'échappement est plus faible que la vitesse de souffle du souffle d'admission aspiré dans l'unité d'admission.

6. Aspirateur selon la revendication 1 ou 2, dans lequel la vitesse de souffle du souffle d'échappement libéré de l'unité d'échappement et la vitesse de souffle du souffle d'admission aspiré dans l'unité d'admission sont pratiquement les mêmes.

7. Aspirateur selon la revendication 1 ou 2, dans lequel la vitesse de souffle du souffle d'échappement libéré de l'unité d'échappement, ou la vitesse de souffle du souffle d'admission aspiré dans l'unité d'admission, ou les deux sont réglables.

8. Aspirateur selon la revendication 1 ou 2, dans lequel la brosse à poussière est disposée de façon rotative ou oscillante.

9. Aspirateur selon la revendication 1 ou 2, dans lequel un élément de brosse à poussière sous forme de bande est enroulé en spirale autour de la brosse à poussière, et le courant d'air le long de la torsion de l'élément de brosse à poussière sous forme de bande généré par la rotation de la brosse à poussière, et le courant s'écoulant de l'unité d'échappement vers l'unité d'admission correspondent sur le plan de la direction.

10. Aspirateur selon la revendication 1 ou 2, dans lequel un mécanisme destiné à guider le souffle d'échappement provenant de l'unité d'échappement en douceur dans la direction d'unité d'admission est prévu près de l'unité d'échappement de l'unité d'aspiration.
